# EUROPÄISCHE PATENTANMELDUNG

(11) **EP 1 950 450 A1**
(43) Veröffentlichungstag der Anmeldung: **30.07.2008**
(21) Anmeldenummer: 08000734.7
(22) Anmeldetag: 16.01.2008
(51) Int. Cl.: F16F 9/54

(54) **Dämpfelement**

(30) Priorität: 29.01.2007 DE 102007005197
(71) Anmelder: ZF FRIEDRICHSHAFEN AG, 88038 Friedrichshafen (DE)
(72) Erfinder: Gelhausen, Ingo, 57539 Fürthen (DE)

(57) **Zusammenfassung**

Dämpfungselement (1) zwischen zwei Massen, bestehend aus einem Behälterrohr (11), einer darin in einem Dämpfungsmedium verschiebbar angeordneten Kolbenstange (5) und einem Befestigungsteil (13) zur Verbindung des Dämpfungselements mit einer ersten der beiden gegeneinander schwingungsarm zu haltenden Massen, wobei die Kolbenstange mit einer der Massen verbunden ist, und das Verbindungselement (13) von einem in Umfangsrichtung geschlossenen Rohrkörper gebildet wird, wobei das Verbindungselement auf einem Längenabschnitt einen mehrseitig radial eingedrückten Querschnitt aufweist.

## Beschreibung

Die Erfindung bezieht sich auf ein Dämpfungselement zwischen zwei Massen, gemäß dem Oberbegriff von Patentanspruch 1.

Es sind bereits Dämpfungselemente der vorgenannten Art bekannt (DE 199 39 515 C2), die beispielsweise an Fahrzeugen zwischen einer ersten Masse, nämlich der von Schwingungen freizuhaltenden Fahrgastzelle und einer zweiten Masse, nämlich den beim Fahrbetrieb unter Schwingungen stehenden Rädern bzw. des Fahrwerkes eingesetzt sind. Das Dämpfungselement ist mittels einer Kolbenstange z. B. mit der ersten Masse und mit einem Befestigungsteil mit einer zweiten Masse verbunden, wobei die Kolbenstange mit einem Dämpfungskolben verbunden ist, welcher in einem Arbeitszylinder eines Behälterrohres angeordnet ist. Das Problem des Befestigungsteiles, welches mit einem Verbindungsteil eines Aufnahmeelementes verbunden ist, besteht darin, dass eine ausreichende Bauteilfestigkeit vorhanden sein muss. Darüber hinaus wird bei derartigen Bauteilen auch eine ausreichende Dauerfestigkeit, sowie ein kleiner Bauraum als auch ein geringes Gewicht gefordert.

Es sind des Weiteren noch Befestigungsteile bekannt (DE 103 48 971 A1), die mehrteilig auf einem Behälterboden, einem Schaft und einer an die erste Masse anschließenden Gabel versehen sind. Des Weiteren sind Befestigungselemente in einteiliger Bauart bekannt (DE 10 2004 001 933 A1).

Aufgabe der Erfindung ist es, ein Dämpfungselement, bestehend aus einem Behälterrohr, einer Kolbenstange und mindestens einem Befestigungsteil, auf kostengünstiger Weise und mit geringem Montageaufwand und Fertigungsaufwand herzustellen, wobei nicht nur eine ausreichende Dauerfestigkeit und ein geringes Gewicht erzielt werden kann, sondern dass außerdem die Anordnung des Befestigungsteiles derart optimiert wird, dass der Bauraum für anderweitige Fahrwerksteile ausgenutzt werden kann.

Erfindungsgemäß wird die Aufgabe dadurch gelöst, dass das Verbindungselement von einem in Umfangsrichtung geschlossenen Rohrkörper gebildet wird, wobei das Verbindungselement auf einem Längenabschnitt einen mehrseitig radial eingedrückten Querschnitt aufweist.

Die mehrseitigen radialen Eindrückungen bewirken eine deutliche Festigkeitssteigerung des Verbindungselements. Des Weiteren kann ein gezielt ausgeformter Bauraum für weitere Achsteile oder in Achsnähe verlaufende Bauteile erreicht werden.

In weiterer vorteilhafter Ausgestaltung weist das Verbindungselement bezogen auf seine Längsachse gegenüberliegende radiale Eindrückungen auf. Durch diese symmetrische Anordnung der Eindrückungen können sehr einfache Werkzeuge verwendet werden

Dabei ist vorgesehen, dass im Bereich der Eindrückungen innenseitig im Rohrkörper ein Restspalt zwischen den beiden Mantelflächen besteht. Es soll bei der Herstellung ein vollständiger Oberflächenschutz, z. B. durch Tauchlackierung möglich sein, bzw. vereinfacht werden.

Gemäß einem vorteilhaften Unteranspruch weist der Rohrkörper einen Nennquerschnitt auf, der an dem Behälterrohr angeschlossenen ist, wobei der Querschnitt im Bereich der radialen Eindrückungen in einer zu den radialen Eindrückungen in Umfangsrichtungen versetzten Ebene eine Durchmesservergrößerung größer als den Nenndurchmesser aufweist. Mit dieser Maßnahme kann die zulässige Biegefestigkeit deutlich gesteigert werden.

Eine weitere Möglichkeit zur optimierten Bauraumgestaltung besteht darin, dass der Flächenschwerpunkt des Querschnitts mit den radialen Eindrückungen exzentrisch zu der Längsachse des Verbindungselements ausgeführt ist.

Zur Vermeidung von zusätzlichen Maßnahmen zur ausgerichteten Zuführung des Verbindungselements in eine Schweißvorrichtung zur Verbindung mit dem Behälter weist der Rohrkörper an beiden Enden identische Anschlussgeometrien auf.

Eine weitere Möglichkeit zeichnet sich dadurch aus, dass das Verbindungselement im Bereich der radialen Eindrückungen einen dreieckigen Querschnitt aufweist.

Insbesondere bei einer Vorderachse mit gelenkten Rädern und damit verdrehbaren Behälterrohren bietet diese Lösung zusätzlichen konstruktiven Freiraum für die besagten Achsbauteile bzw. achsnahen Bauteile.

Als besonders vorteilhaft im Hinblick auf die erreichbaren Festigkeitswerte hat es sich herausgestellt, wenn die radialen Eindrückungen den Querschnitt eines gleichschenkligen Dreiecks bilden.

Aufgrund der dreiseitigen radialen Eindrückung kann eine im Vergleich zur zweiseitigen Eindrückung noch deutlichere Steigung einer Querschnittsachse erreicht werden, indem in Erstreckung der längsten Kante des Querschnitts eine Durchmesservergrößerung über den Nenndurchmesser des Rohrkörpers vorliegt.

Anhand der folgenden Figurenbeschreibung soll die Erfindung näher erläutert werden.
- Fig. 1: Vorderansicht eines Dämpfungselements
- Fig. 2: Seitenansicht zur Fig. 1
- Fig. 3 u. 4: Schnittdarstellungen durch das Verbindungselement nach den Fig. 1 und 2
- Fig. 5: Räumliche Darstellung eines alternativen Verbindungselements
- Fig. 6: Ansicht zur Fig. 5
- Fig. 7: Schnittdarstellung zur Fig. 5
- Fig. 8: Draufsicht zur Fig. 6
- Fig. 9: Schnittdarstellung zur Fig. 6

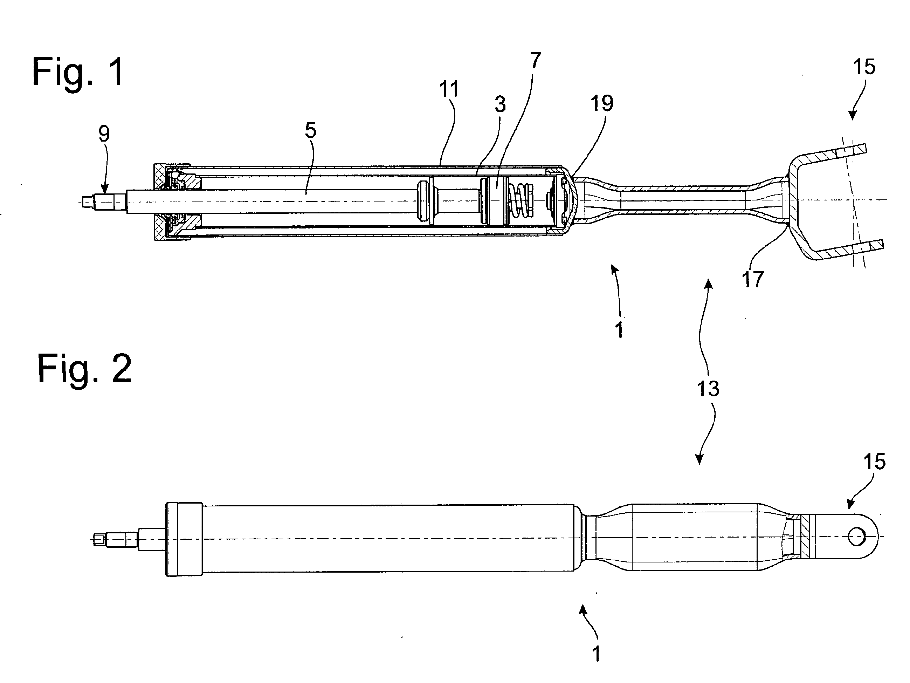

Die Figuren 1 und 2 zeigen ein Dämpfungselement 1 in der Bauform eines allgemein bekannten Schwingungsdämpfers, z. B. eines Zweirohr-Schwingungsdämpfers. Der Schwingungsdämpfer 1 umfasst einen Zylinder 3, in dem eine Kolbenstange 5 zusammen mit einem Kolben 7 axial beweglich geführt ist. An dem außenseitigen Ende der Kolbenstange 5 sind Befestigungsmittel 9 für ein nicht dargestelltes Anschlussorgan ausgeführt.

Ein Behälterrohr 11 hüllt den Zylinder 3 ein. An einem bodenseitigen Ende ist ein Verbindungselement 13 ausgeführt, an dem ein gabelförmiges Anschlussgelenk 15 befestigt ist, so dass der Schwingungsdämpfer 1 zwischen zwei Massen, z. B. einem Fahrzeugaufbau und einer Fahrzeugachse montierbar ist.

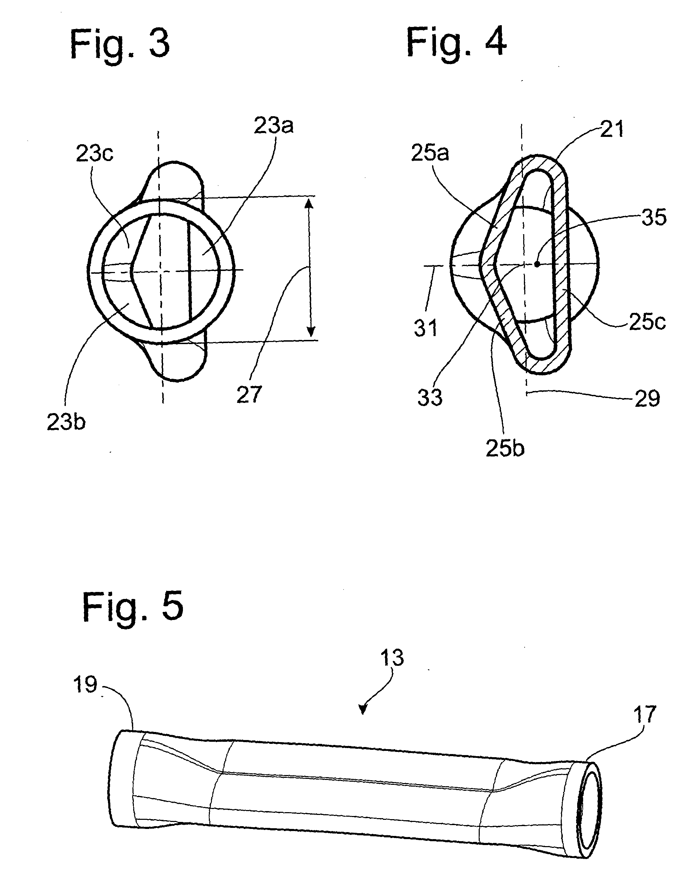

Das Verbindungselement 13 wird von einem in Umfangsrichtung vollständig geschlossenen Rohrkörper gebildet. An beiden Enden des Rohrkörpers sind identische Anschlussgeometrien 17; 19 ausgeführt. Der Rohrkörper verfügt in einem mittleren Längenabschnitt über einen mehrseitig radial eingedrückten Querschnitt 21, wie die Zusammenschau der Fig. 3 und 4 verdeutlicht. In der vorliegenden Variante bilden die radialen Eindrückungen 23a; 23b; 23c einen dreieckigen Querschnitt 21 mit zwei gleichen Schenkellängen 25a; 25b.

Die Anschlussgeometrien 17; 19 stellen den Nenndurchmesser 27 des Rohrkörpers dar. Das durch die radialen Eindrückungen verformte Volumen des Rohrkörpers lässt man über den Nenndurchmesser 27 hinaus fließen, wobei die in Erstreckung der längsten Kante 25c des Querschnitts 21 eine Durchmesservergrößerung 28 über den Nenndurchmesser 27 erreicht wird.

Im Schnittpunkt der Hauptachsen 29; 31 verläuft die Längsachse 33 des Rohrkörpers. In der Fig. 4 wird deutlich, dass der Flächenschwerpunkt 35 im Bereich der radialen Eindrückungen 23a; 23b; 23c exzentrisch zur Längsachse 33 des Verbindungselements 13 ausgeführt ist.

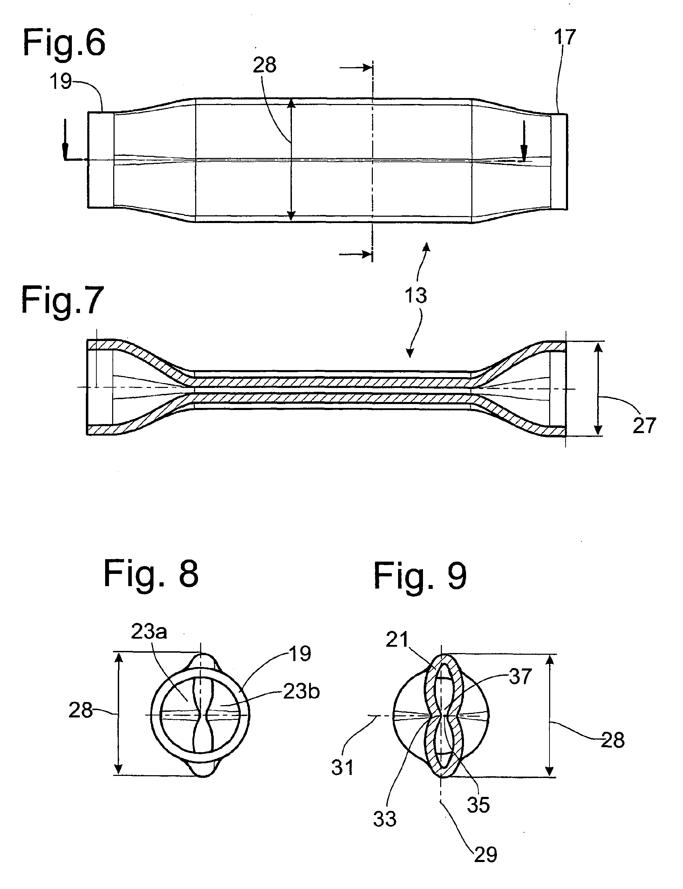

Die Figurengruppe Fig. 5 bis 9 zeigt eine Alternativvariante, deren Hauptvorteil darin besteht, dass sie durch zwei gegensinning in das Verbindungselement einwirkende Verformungswerkzeuge sehr leicht herstellbar ist. Aus der Zusammenschau der Fig. 5 bis 7 ist erkennbar, zwei bezogen auf die Längsachse 33 des Verbindungselements 13 gegenüberliegende Eindrückungen 23a; 23b einen Querschnitt 21 bilden, der in etwa einer "Acht" entspricht. Dabei besteht jedoch im Bereich der Eindrückungen 23a; 23b innenseitig im Rohrkörper zwischen den Mantelflächen ein Restspalt 37, wie insbesondere die Figuren 8 und 9 zeigen.

Auch bei dieser Lösung verfügt das Verbindungselement 13 über einen Nennquerschnitt 27, der dem Anschlussmaß an das Behälterrohr 11 entspricht. Der Querschnitt 21 im Bereich der radialen Eindrückungen verfügt in Umfangsrichtung versetzt ebenfalls über eine Durchmesservergrößerung 28, s. Fig. 8 und Fig. 9, wobei eine radiale Verschiebung bzw. Exzentrizität des Flächenschwerpunkts 35 des Querschnitts im Bereich der radialen Eindrückungen 23a; 23b bezogen auf die Längsachse des Verbindungselements 13 vorliegt.

## Patentansprüche

1. Dämpfungselement (1) zwischen zwei Massen, bestehend aus einem Behälterrohr, einer darin in einem Dämpfungsmedium verschiebbar angeordneten Kolbenstange (5) und Element (13) zur Verbindung des Dämpfungselements mit einer ersten der beiden gegeneinander schwingungsarm zu haltenden Massen, wobei die Kolbenstange (5) mit einer der Massen verbunden ist,
**dadurch gekennzeichnet,**
**dass** das Verbindungselement (13) von einem in Umfangsrichtung geschlossenen Rohrkörper gebildet wird, wobei das Verbindungselement (13) auf einem Längenabschnitt einen mehrseitig radial eingedrückten Querschnitt (21) aufweist.

2. Dämpfungselement nach Anspruch 1,
**dadurch gekennzeichnet,**
**dass** das Verbindungselement bezogen auf seine Längsachse (33) gegenüberliegende radiale Eindrückungen (23a; 23b) aufweist.

3. Dämpfungselement nach Anspruch 1,
**dadurch gekennzeichnet,**
**dass** im Bereich der Eindrückungen (23a; 23b) innenseitig im Rohrkörper ein Restspalt (37) zwischen den beiden Mantelflächen besteht.

4. Dämpfungselement nach Anspruch,
**dadurch gekennzeichnet,**
**dass** der Rohrkörper einen Nennquerschnitt (27) aufweist, der an dem Behälterrohr (11) angeschlossenen ist, wobei der Querschnitt (21) im Bereich der radialen Eindrückungen (23a; 23b; 23c) in einer zu den radialen Eindrückungen (23a; 23b; 23c) in Umfangsrichtungen versetzten Ebene eine Durchmessererweiterung (28) größer als den Nenndurchmesser (27) aufweist.

5. Dämpfungselement nach Anspruch,
**dadurch gekennzeichnet,**
**dass** der Flächenschwerpunkt (35) des Querschnitts (21) mit den radialen Eindrückungen (23a; 23b; 23c) exzentrisch zu der Längsachse (33) des Verbindungselements (13) ausgeführt ist.

6. Dämpfungselement nach Anspruch 1,
**dadurch gekennzeichnet,**
**dass** der Rohrkörper an beiden Enden identische Anschlussgeometrien (17; 19) aufweist.

7. Dämpfungselement nach Anspruch 1,
**dadurch gekennzeichnet,**
**dass** das Verbindungselement (13) im Bereich der radialen Eindrückungen (23a; 23b; 23c) einen dreieckigen Querschnitt (21) aufweist.

8. Dämpfungselement nach Anspruch 6,
**dadurch gekennzeichnet,**
**dass** die radialen Eindrückungen (23a; 23b; 23c) den Querschnitt (21) eines gleichschenkligen Dreiecks (25a; 25b; 25c) bilden.

9. Dämpfungselement nach Anspruch 8,
**dadurch gekennzeichnet,**
**dass** in Erstreckung der längsten Kante (25c) des Querschnitts (21) eine Durchmesservergrößerung (28) über den Nenndurchmesser (27) des Rohrkörpers vorliegt.
